# EUROPEAN PATENT APPLICATION

(11) **EP 1 057 410 A1**
(43) Date of publication of application: **06.12.2000**
(21) Application number: 00303288.5
(22) Date of filing: 18.04.2000
(51) Int. Cl.: A22C 13/00, C08L 1/02

(54) **Method of preparing a block resistant non-derivatized food casing**

(30) Priority: 04.06.1999 US 325708
(71) Applicant: VISKASE CORPORATION, Chicago, Illinois 60638 (US)
(72) Inventor: DuCharme, Paul Edmund, Jr., Illinois 60477 (US); Kajiwara, Edward Makoto, Park Ridge, Illinois 60068 (US); Mc Garel, Owen Joseph, Naperville, Illinois 60540 (US)
(74) Representative: W.P. THOMPSON & CO.

(57) **Abstract**

A method of forming a blocking resistant non-derivatized cellulose casing by incorporating into the casing 0.4 to 2 wt. % of a poly(ethylene oxide) having a molecular weight of 100,000 to 6,000,000. The poly(ethylene oxide) is added as an aqueous solution 12 to a premix of cellulose, water and an amine oxide cellulose solvent prior to the dissolution of the cellulose.

## Description

The present invention relates to cellulosic food casings made using a solvent process and more particularly to a method of treating a cellulose premix prior to dissolution of the cellulose to improve the shirring related properties of the casing including increasing the blocking resistance of the non-derivatized casing.

A solvent system for making cellulosic food casings is known in the art. Briefly, a natural cellulose such as a wood pulp or cotton linters is mixed with an aqueous tertiary amine oxide cellulose solvent such as N-methyl-morpholine-N-oxide (NMMO) to prepare a premix. The premix is heated with stirring to evaporate a portion of the water and dissolve the cellulose. The result is a thermoplastic cellulose solution which can be extruded or molded to a desired shape. The extruded or formed article composed of the cellulose solution then is contacted with a cellulose non solvent such as water or a non solvent mixture of water and NMMO. This causes the extraction of the solvent from the dissolved cellulose and the regeneration of the cellulose from the solution.

The solvent system, as set out above, is distinguished in that the natural cellulose is dissolved directly as opposed to chemically treating the cellulose to form a soluble cellulose derivative as in the well known viscose process. Accordingly, for purposes of the present invention, the term "non-derivatized cellulose" means a cellulose which has not been subject to covalent bonding with a solvent or reagent but which has been dissolved by association with a solvent or reagent through Van der Waals forces or hydrogen bonding.

The dissolution process as described above is more particularly set out in US-A-2,179,181; US-A-3,447,939; US-A-4,145,532; US-A-4,426,228 and US-A-5,094,690. Methods and apparatus for forming a food casing from the thermoplastic cellulose solution are more particularly described in US-A-5,277,857; US-A-5,451,364; US-A-5,759,478 and US-A-5,766,540.

In brief, forming a tubular food casing is accomplished by extruding the cellulose solution as a tube into a bath of non solvent liquid. The extraction of solvent and regeneration of the cellulose in the bath forms a hydrated, or "gel", tube of cellulose. After regeneration, the gel tube is washed to remove traces of the solvent. Then it is dipped into a glycerine solution and dried under inflation to about 7 to 10 percent moisture based on the weight of cellulose to form a tubular cellulose film for use as a sausage casing. After drying, the inflated tube (hereafter referred to as casing) is collapsed to its flat width and reeled with up to 11,000 feet (3353 metres) or more of casing on each reel. The casing on the reel is referred to as "semi-finished casing". The semi-finished casing is then subjected to further treatment in order to prepare it for use by the sausage maker.

For example, small diameter casing as may be used to make frankfurters, is further treated by shirring. This process, well known in the art, involves inflating the casing and gathering it into folds or pleats so that a relatively long length is gathered into a much shorter "stick" for use by the sausage maker. It is not unusual for the shirring operation to gather 120 feet (36.5 metres) or more of casing into a stick length of only 1½ feet (0.45 metres) or less at shirring speeds of up to 1500 feet (457 metres) per minute.

At the time of shirring, both a non-derivatized cellulose casing made with a solvent process and a derivatized cellulose casing as made, for example, with the viscose process are similar. In this respect, both have about the same glycerine and water content. However, and unexpectedly, the shirring of small diameter non-derivatized cellulose casing made using the solvent process as described above, encountered problems not encountered when shirring a casing made in a more traditional method using a derivatized cellulose by the viscose process. In particular, it was found that the inner surfaces of the flattened semi-finished non-derivatized casing on the reel were prone to blocking and would adhere so the casing tore upon inflation during shirring. The blocking occurred, in particular, along the dryer fold of the casing. The dryer fold is the fold produced as the inflated casing exits the drier and is collapsed to a flat width for reeling onto reels. This was even more surprising because the outer surfaces of the casing did not stick together. Thus, while the casing could be unwound from the reel without difficulty, it was difficult to inflate without failure because the inner surfaces blocked. This implied that for unknown reasons, the outer and inner surfaces of the non-derivatized casing had different properties and different surface energies. This is not the case with a casing made with a derivatized cellulose obtained as with the viscose process. Such casing usually unreels and inflates without difficulty indicating that the inner and outer surface of such casing had similar properties and surface energies.

Thus, one problem to overcome in order to successfully shirr a food casing of a non-derivatized cellulose is to reduce the tendency of the inside surfaces of the flattened dry casing to block or stick together causing the casing to tear when attempting to inflate the casing.

In the case of a conventional derivatized cellulose casing, it is known to add an olefinic oxide polymer such as poly(ethylene oxide) or PEO at any one of several points in the manufacturing process. For example, US-A-5,470,514 discloses that cellulose casings containing an olefinic oxide polymer exhibit lower static and kinetic coefficients of friction than similar casings not containing an olefinic oxide polymer. This lower coefficient of friction, according to the '519 Patent, is believed to contribute to improvements in the machinability of the casings. While the '519 Patent has examples directed only to derivatized casings, it does suggest that the poly(ethylene oxide) can be added at various points prior to extrusion to create the extrudable cellulose or extrudable cellulose derivative such as by the cuprammonium, -methyl-morpholine-N-oxide, zinc chloride or cellulose carbamate processes.

Accordingly, the present invention seeks to provide a method of providing a casing of a non-derivatized cellulose having improved resistance to blocking.

Also, the present invention seeks to provide a method of making a casing of a non-derivatized cellulose in which a high molecular weight olefinic oxide polymer, added prior to cellulose dissolution, is used to provide the resulting non-derivatized cellulose casing with improved anti-blocking properties to facilitate a subsequent shirring operation.

Further, the present invention seeks to provide a method of incorporating a high molecular weight olefinic oxide polymer into a non-derivatized cellulose solution as an aqueous solution.

According to the present invention, there is provided a tubular food casing of a non-derivatized cellulose with enhanced block resistance comprising a poly(ethylene oxide) having a molecular weight less than 6,000,000 in an amount sufficient to reduce the adherence of the inner surface of the casing to itself upon inflating from a flattened condition as compared to a like casing only without the poly(ethylene oxide).

This is accomplished by adding the poly(ethylene oxide) or PEO to a mixture which subsequently is used to produce an extrudable thermoplastic cellulose solution from which the non-derivatized cellulose casing is made.

The present invention also provides a method for providing a tubular food casing of a non-derivatized cellulose with enhanced block resistance by incorporating into the casing a poly(ethylene oxide) having a molecular weight less than 6,000,000 in an amount sufficient to reduce the adherence of the inner surface of the casing to itself upon inflating from a flattened condition as compared to a like casing only without the poly(ethylene oxide).

According to another aspect of the present invention, there is provided a method of forming a non-derivatized cellulose food casing which resists blocking such that opening of the casing from a flattened condition by inflating with air is facilitated, said method comprising the steps of:
a) preparing a first aqueous solution containing 6 to 13wt. % of a poly(ethylene oxide) having a molecular weight of 100,000 to 6,000,000;
b) combining the first aqueous solution with 5 to 20 wt.% of a cellulose pulp, 18 to 24 wt.% water, 60 to 80 wt. % of a tertiary amine oxide cellulose solvent to provide a poly(ethylene oxide)-containing premix having a water content of 20 to 25 wt.%;
c) heating the poly(ethylene oxide)-containing premix and evaporating a portion of the water for solubilizing the cellulose thereby forming a thermoplastic poly(ethylene oxide)-containing cellulose solution of the premix;
d) extruding the poly(ethylene oxide)-containing cellulose solution as a tube and extracting solvent from the extruded tube to form a poly(ethylene oxide)-containing hydrated tubular film of non-derivatized cellulose wherein the poly(ethylene oxide) is substantially uniformly distributed throughout the wall of the tubular film and along the inner surface of the tubular film;
e) drying the tubular film to a moisture content of 10 to 20 wt.% while holding the tube open by inflation to form a poly(ethylene oxide)-containing non-derivatized cellulose casing;
f) flattening the poly(ethylene oxide)-containing non-derivatized cellulose casing and then reeling it; and
g) unreeling the casing and inflating it for shirring; wherein the poly(ethylene oxide) in the casing provides means for preventing the blocking of the flattened casing to itself as compared to a like casing only without the poly(ethylene oxide).

A conventional mixture, called a "premix", currently used for making the cellulose solution comprises about 5 to 20 wt.% of a natural cellulose (such as wood pulp or cotton linters), 60 to 80 wt.% NMMO and 20 to 25 wt.% water together with a small amount (less than about 0.1 wt.%) of propyl gallate for stability. As a stabilizer, propyl gallate is consumed in the process and does not appear in the finished casing. Accordingly, it is not referred to hereinafter.

In the process, the premix is heated to evaporate water and concentrate the NMMO to the point where the cellulose pulp goes into solution. The cellulose solution is thermoplastic in that it is a solid at room temperature. The solution is sometimes called "dope" and comprises about 12 to 17 wt.% cellulose, 70 to 80 wt.% NMMO and 8 to 12 wt.% water.

The premix and dope compositions noted above are relatively standard for the production of molded articles of cellulose such as cellulose fibers and has been adopted for use in making tubular films suitable for use as sausage casings.

The incorporation of PEO into the extrudable dope composition faces several difficulties. First the PEO is not soluble in NMMO nor does the PEO readily solubilize in water. Consequently, it is difficult, and likely impossible to add a high molecular weight PEO, in its normal powder form, directly to the premix or the dope. To overcome this problem and, in accordance with the present invention, the PEO is added to the premix as an aqueous solution. However, adding more water to the premix in the form of an aqueous PEO solution is not desirable as it decreases the NMMO concentration. For example, it is preferred that the NMMO concentration in the premix prior to evaporation of the water be about 60 to 80 wt.% and preferably about 76 wt.%. To achieve this end value, it is customary to add the NMMO to the premix ingredients as a 78 wt.% aqueous solution. This subsequently is diluted to the desired 76% level by the addition of further water and by the water contained in the propyl gallate solution. Lower concentrations of NMMO in the premix are not desirable as this means there is an excess of water in the premix which has to be evaporated in order to solubilize the cellulose.

Accordingly, in the present invention, the amount of water in the initial cellulose, water, and tertiary amine oxide cellulose solvent mixture is reduced to compensate for the water added with the PEO solution. In this fashion, the PEO is first dissolved in water. This solution then is added as an ingredient to the remaining ingredients to form the premix. It has been found that once in solution, the PEO will remain in solution even after it is added to the other premix ingredients. Moreover, by selecting a PEO having a lower molecular weight and limiting the amount used, it has been found that, surprisingly, the PEO will remain in solution even after the water has been evaporated to concentrate the tertiary amine oxide cellulose solvent and dissolve the cellulose.

A PEO found suitable for use in the present invention is one having a molecular weight in the range of 100,000 to 6,000,000 and preferably is one having a molecular weight less than 1,000,000. Most preferably, the PEO is one having a molecular weight of about 100,000. While it is possible to use a PEO having a molecular weight of up to 6,000,000, this requires diversion of most, if not all, of the water from the premix. Accordingly, it generally is desirable to use a PEO having a molecular weight no higher than about 1,000,000 in view of the difficulty of maintaining the PEO in solution even in small quantities given the limited amount of water available in the premix.

For purposes of the present invention, a PEO having a molecular weight of about 100,000 is most appropriate because the cellulose itself has about the same molecular weight. It is speculated that a PEO which approximates the molecular weight of the cellulose is more likely to remain bonded within the cellulose structure of the casing. It has been found that when 0.4 to 2.0% of a 100,000 molecular weight PEO (based on the weight of cellulose) is present in the semi-finished non-derivatized cellulose casing, the blocking problems heretofore experienced inexplicably were reduced or disappeared altogether. There are several potential reasons for this. While not intending to be bound by any theory, one possible reason for the reduction in blocking is that the PEO changes the surface chemistry of the casing. Since PEO is a known lubricant, its presence at the inner surface of the casing possibly decreases the coefficient of friction at the inner surface so as to avoid blocking.

It also is speculated that the blocking effect possibly is the result of strong hydrogen bonding created when the non-derivatized cellulose is dried. This is because while the dried film is subject to blocking, the film when re-wet, opens easily. Thus, PEO in the dried film may disrupt a hydrogen bonding effect.

For the purposes of the present invention, the PEO is added to the premix as an aqueous solution, wherein the solution and amount added does not substantially increase the moisture content of the premix from the desired water content of 20 to 25% by weight. This is because a higher water content unnecessarily increases the time and energy required to reduce the water content of the premix to the level where the cellulose is solubilized.

The PEO is selected such that its molecular weight permits a sufficient amount of the PEO to remain in solution after the evaporation of the amount of water necessary to put the cellulose in solution. In this respect, the water content of the cellulose solution or dope preferably contains not more than about 8 to 12 wt.% of water. Accordingly, the molecular weight and amount of PEO used is selected so that the PEO is totally solubilized and remains solubilized as the moisture is evaporated to reduce moisture content to this level from the 20 to 25 wt.% of the premix. If the amount of PEO used or its molecular weight are such that the amount of water in the dope is insufficient to keep the PEO in solution, the PEO will precipitate. As a result, the casing which is made from this cellulose solution will have a grainy, sandpaper-like appearance caused by particles of the precipitated and undissolved PEO disrupting the continuous matrix of regenerated cellulose. Conversely, if the PEO remains solubilized in the dope, the casing which is made will incorporate the PEO molecule and have the PEO uniformly distributed throughout the casing wall.

The present invention may be characterized in one aspect by a method for providing a tubular food casing composed of a non-derivatized cellulose with enhanced block resistance by uniformly incorporating into the casing a poly(ethylene oxide) water soluble polymer having a molecular weight of less than 1,000,000 in an amount sufficient to reduce the adherence of the inner surface of the casing to itself such that damage to the casing upon inflating it from a flattened condition is reduced as compared to the casing only without the poly(ethylene oxide).

In another aspect, the invention may be characterized by a method of providing a non-derivatized cellulose food casing having improved blocking resistance to facilitate the opening of the casing by inflation from a flattened condition just prior to shirring comprising the steps of:
a) preparing a first aqueous poly(ethylene oxide) solution containing 6 to 13 wt.% of a poly(ethylene oxide) having a molecular weight of 100,000 to 6,000,000;
b) combining 1.0 to 2.0 wt.% of the first aqueous solution with 5 to 20 wt.% of a cellulose pulp, 18 to 24 wt.% water and 60 to 80 wt.% amine oxide cellulose solvent to provide a poly(ethylene oxide)-containing cellulose premix having a water content of 20 to 25 wt.%;
c) heating the poly(ethylene oxide)-containing premix and evaporating a portion of the water for putting the cellulose pulp into solution thereby providing an extrudable thermoplastic cellulose solution which contains poly(ethylene oxide) in solution.
d) extruding the cellulose solution as a tube and extracting the amine oxide cellulose solvent by contacting with a non solvent liquid to form a hydrated poly(ethylene oxide)-containing non-derivatized cellulose tube wherein the poly(ethylene oxide) is substantially uniformly distributed throughout the wall of the tube and along the inner surface of the tube;
e) drying the hydrated poly(ethylene oxide)-containing non-derivatized cellulose tube to a water content of about 10 to 20 % based on the weight of cellulose while holding the tube open by inflation, then collapsing the dried tube and reeling it; and
f) unreeling and inflating the dried tube for shirring whereby the poly(ethylene oxide) at the inner surface of the tube provides means for preventing the blocking of the flattened tube walls one to another upon reinflation.

Embodiments of the present invention will now be described, by way of example only, with reference to the accompanying diagrammatic drawings, in which:
Figure 1 is a schematic representation of a process according to the present invention;
Figure 2 is a schematic representation of a shirring process;
Figure 3 is a view showing a portion of a tubular casing laid to a flat width;
Figure 4 is a perspective view of a portion of the inner surface of a tubular casing;
Figure 5 is a view taken along lines 5-5 of Figure 4; and
Figure 6 is a view taken along lines 6-6 of Figure 4.

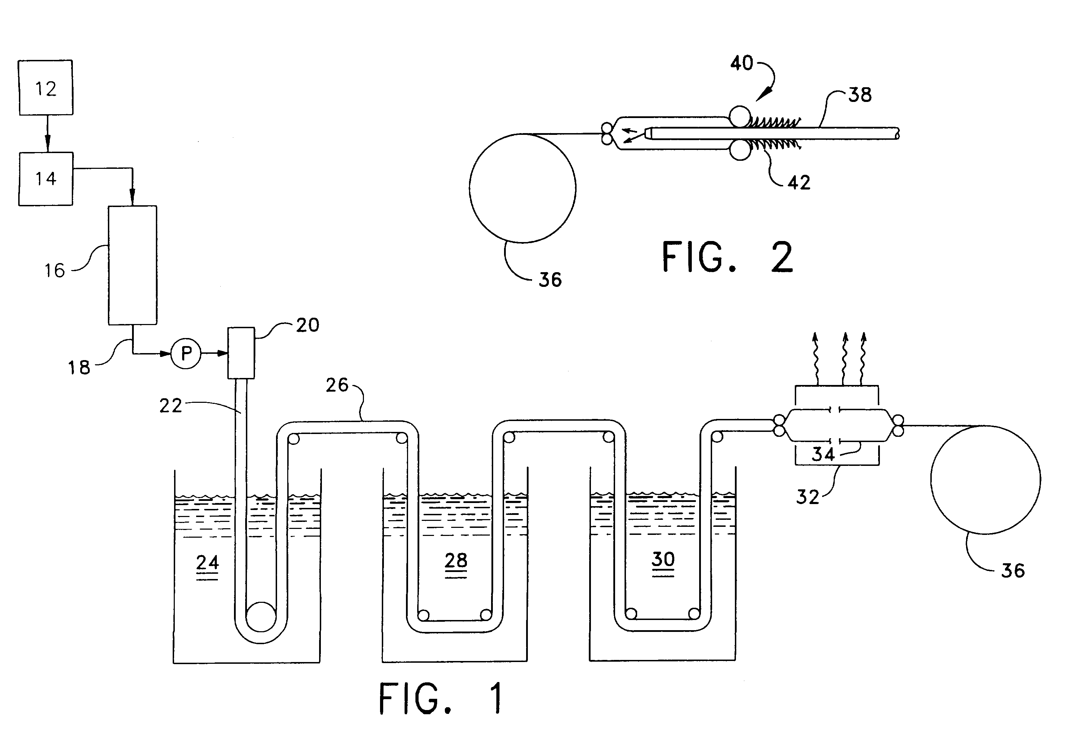

Referring to Figure 1, a first step in the process is to prepare an aqueous poly(ethylene oxide), or PEO solution at 12. Preferably, this is done by adding a PEO having a molecular weight less than 6,000,000 in powder form to water at room temperature under constant stirring. The PEO preferably is one in a molecular weight range of 100,000 to 1,000,000. A preferred PEO is available from Union Carbide Corporation under the trademark PolyOX® such as PolyOX NF-10. This material is a non ionic water soluble polymer having a molecular weight of 100,000.

It may take several hours of mixing to solubilize the PEO to provide an aqueous PEO solution containing from 6 to 13 wt.% PEO. A preferred solution, given the practical limitations of time and solubility, is a 6.25% solution of a 100,000 molecular weight PEO.

Next, 1 to 2 wt.% of the PEO solution from 12 is added together with cellulose pulp, water and NMMO (N-methyl-morpholine-N-oxide) cellulose solvent to a mixing vessel 14. The constituents can be added together and mixed to form a cellulose premix. As an alternative, the natural cellulose, water and NMMO can be preblended and the PEO added to this preblend. The resulting premix is about 10 to 15 wt.% cellulose, 60 to 70 wt.% NMMO, 20 to 25 wt.% water and .4 to 2.0% PEO wherein the amount of PEO is based on cellulose. Preferably the amount of PEO is 0.6 to 1.0% with about 0.75% being most preferred.

The cellulose premix from 14, which is a dough-like mass, is fed to the top of heated vessel 16 of the type described in US-A-5,094,690 and US-A-5,330,567. As disclosed in the '690 and '567 Patents, components within the vessel direct the premix downwardly along the heated surface of the vessel. As the premix moves downwardly, water is evaporated to concentrate the NMMO. Eventually the NMMO concentration reaches a point where the cellulose goes into solution. The cellulose solution or dope is forced from a bottom outlet 18. The dope leaving the vessel is a highly viscous thermoplastic solution. Typically, the zero shear rate viscosity of the dope is 500 to 30,000 Pascal seconds. The dope generally will comprise by total weight 12 to 17% cellulose, 70 to 80% NMMO and 8 to 12% water. The PEO content is about 0.4 to 2.0% based on the weight of the cellulose. In a preferred composition, the cellulose content of the dope is about 14% of total weight, the NMMO and water are present in a ratio of 88:12 and the PEO is about 0.75% based on the weight of cellulose.

The solution is pumped to a die 20 arranged to downwardly extrude the dope as a tube 22. The extruded tube 22 enters a regenerating bath 24 which extracts the solvent from the extruded tube to produce a tube 26 composed of a hydrated non-derivatized cellulose gel. The die and process for extruding the tube 22 form no part of the present invention and reference is made to US-A-5,277,857, US-A-5,451,364 and US-A-5,766,544 for more details regarding the extrusion process per se.

The gel tube 26 is washed at 28 to remove residual solvent. It then is passed through a glycerine solution 30 and dried under inflation in a dryer 32. Drying crosslinks the cellulose and sets it to a tubular film 34 of a non-derivatized cellulose suitable for use as a food casing. While the PEO survives and remains uniformly distributed in the casing, the propyl gallate present in the dope is sacrificed in the process and is not found in the casing. Thus, a casing, after drying and ready for shirring, comprises about 60-80 wt.% cellulose, 10-20 wt.% glycerin, 10-20 wt.% water and 0.4-2.0% PEO. In a preferred range, the PEO is 0.6 to 1% of the weight of the cellulose and most preferably is about 0.75% of the weight of the cellulose. The PEO in the casing is uniformly distributed throughout the casing wall including the inner surface of the casing. Moreover, the PEO is bound within the cellulose structure and is not removed by either the washing or drying operations.

After drying, the tubular film is flattened and wound onto a reel 36. The film may be stored on the reel for some time, for example 1 to 6 months. During this time, it is important that the tubing remains unblocked so it can be unreeled and inflated without damage to the casing.

At some point the tubular film is drawn from the reel and is converted by shirring. As set out above, shirring is a known process as illustrated schematically in Figure 2. During shirring, tubular film is pulled from the reel 36 and is opened by inflation. The inflated casing then is drawn along a mandrel 38 through shirring device 40, usually a set of toothed wheels. As the inflated film passes through the shirring device 40, the tubular film is gathered into pleats to form what is known in the art as a "shirred stick" indicated at 42. After a desired length of film is shirred, the shirred stick 42 is severed, axially compressed and doffed from the mandrel by means not shown.

Critical to being able to shirr casing from the reel 36 is the ability of the flattened casing to open freely when inflated. A casing which blocks and is difficult to open can be damaged on inflation. The damage, if severe, may lead to an immediate shirring failure. In other instances, the damaged casing survives shirring but the damage is such that it is manifest as failure on stuffing. In a worst cast, the casing cannot be inflated at all so it cannot be shirred.

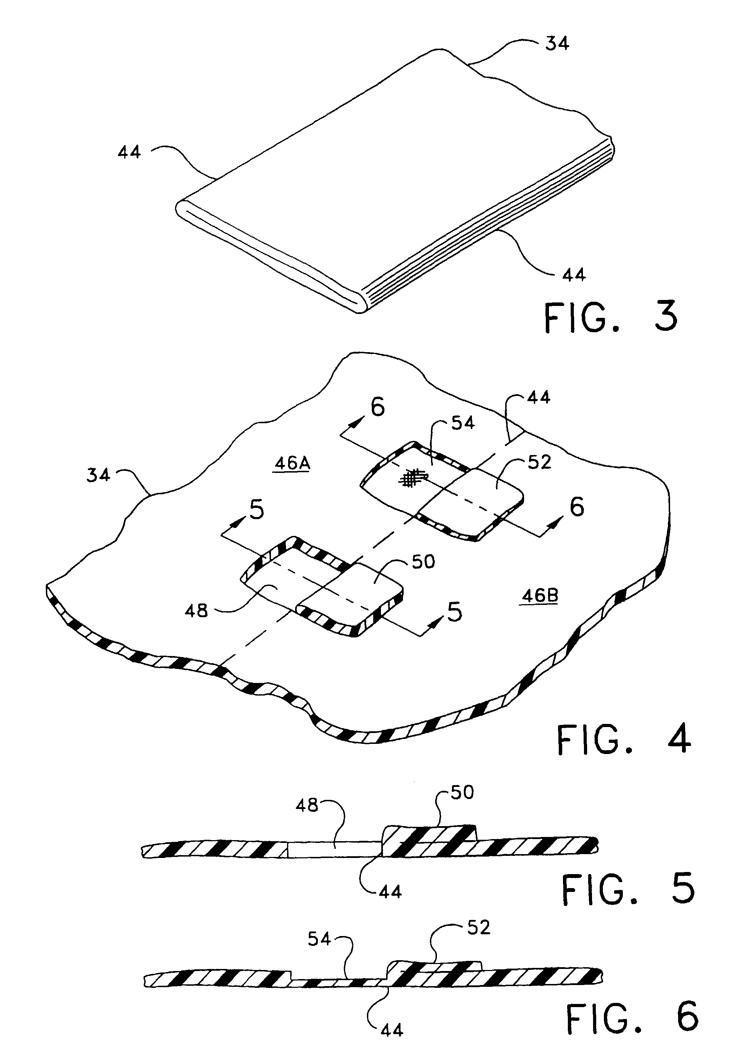

The blocking of non-derivatized cellulose as mentioned above, has been found to occur primarily along what is known as the "drier fold". The drier fold, as shown in Figure 3, is the fold 44 formed when the inflated casing 34 leaving the drier 32 is flattened for take up onto reel 36 (Figure 1).

Blocking damage may take several forms as shown in Figures 4-6. Figure 4 represents a piece of casing 34 which is cut open and laid flat to show portions of the casing inner surfaces 46A and 46B on either side of the drier fold 44. In one form, the damage is an actual hole 48 in the casing. As shown in Figures 4 and 5, this hole is formed when a piece of casing 50 from one side 46A of the drier fold adheres to the casing on the other side 46B and is torn away as the casing is inflated during shirring. The tearing away of the casing piece 50 often is heard as a "pop" as the casing is inflated. The resulting hole 48, if large enough, may cause an interruption in shirring. In most cases, the opening is small enough so the shirring is not interrupted but such openings or "pin holes" are unacceptable defects.

In a less severe form, the blocking results in a delamination of a portion of the casing wall as shown in Figures 4 and 6. In delamination, a section 52 of the casing wall is torn away but no hole is formed. However, the weakened area of the casing as represented by the thinned wall section 54 may not be strong enough to survive stuffing pressures. In this event, the thinned wall section 54 will blow out during stuffing and, likewise, is an unacceptable defect.

The incorporation of poly(ethylene oxide) into the premix as described such that the semifinished casing contains from 0.4 to 2.0% and preferably 0.6 to 1.0% PEO based on the weight of the cellulose, will have less blocking damage than a comparable semifinished casing made without the incorporation of PEO. The improved resistance to blocking will, at the least, substantially reduce both the instances of casing damage during shirring and the potential of casing failure during stuffing.

## Claims

1. A tubular food casing of a non-derivatized cellulose with enhanced block resistance comprising a poly(ethylene oxide) having a molecular weight less than 6,000,000 in an amount sufficient to reduce the adherence of the inner surface of the casing to itself upon inflating from a flattened condition as compared to a like casing only without the poly(ethylene oxide).

2. A tubular food casing as claimed in claim 1 wherein the poly(ethylene oxide) has a molecular weight of 100,000 to 1,000,000.

3. A tubular food casing as claimed in claim 1 or claim 2 wherein the amount of poly(ethylene oxide) in the casing is 0.4 to 2.0% by weight of the cellulose.

4. A method for providing a tubular food casing of a non-derivatized cellulose with enhanced block resistance by incorporating into the casing a poly(ethylene oxide) having a molecular weight less than 6,000,000 in an amount sufficient to reduce the adherence of the inner surface of the casing to itself upon inflating from a flattened condition as compared to a like casing only without the poly(ethylene oxide).

5. A method as claimed in claim 4 wherein incorporating the poly(ethylene oxide) into the casing is accomplished by incorporating an aqueous solution of the poly(ethylene oxide) into an extrudable cellulose solution which is subsequently extruded to form the non-derivatized casing.

6. A method as claimed in claim 5 wherein the extrudable cellulose solution incorporating the poly(ethylene oxide) is prepared by:
a) preparing a first aqueous solution (12) comprising a poly(ethylene oxide) having a molecular weight of 100,000 to 6,000,000;
b) adding the first aqueous solution to a mixture of cellulose pulp, a tertiary amine oxide cellulose solvent and water to form a premix (14) comprising by total weight, 10 to 15% cellulose, 60 to 80% of the cellulose solvent, 20 to 25% water and 0.4 to 2.0% of the poly(ethylene oxide) based on the weight of the cellulose; and
c) heating the premix to evaporate a portion of the water to increase the concentration of the cellulose solvent and to solubilize the cellulose pulp while maintaining the poly(ethylene oxide) in solution.

7. A method as claimed in claim 6 wherein the first aqueous solution is prepared by stirring 6 to 13 wt.% of the poly(ethylene oxide) into water.

8. A method as claimed in claim 6 wherein the first aqueous solution comprises 6.5 wt. % poly(ethylene oxide).

9. A method of forming a non-derivatized cellulose food casing which resists blocking such that opening of the casing from a flattened condition by inflating with air is facilitated, said method comprising the steps of:
a) preparing a first aqueous solution (12) containing 6 to 13wt. % of a poly(ethylene oxide) having a molecular weight of 100,000 to 6,000,000;
b) combining the first aqueous solution with 5 to 20 wt.% of a cellulose pulp, 18 to 24 wt.% water, 60 to 80 wt. % of a tertiary amine oxide cellulose solvent to provide a poly(ethylene oxide)-containing premix (14) having a water content of 20 to 25 wt.%;
c) heating the poly(ethylene oxide)-containing premix and evaporating a portion of the water for solubilizing the cellulose thereby forming a thermoplastic poly(ethylene oxide)-containing cellulose solution of the premix;
d) extruding the poly(ethylene oxide)-containing cellulose solution as a tube (22) and extracting solvent from the extruded tube to form a poly(ethylene oxide)-containing hydrated tubular film (26) of non-derivatized cellulose wherein the poly(ethylene oxide) is substantially uniformly distributed throughout the wall of the tubular film and along the inner surface of the tubular film;
e) drying the tubular film to a moisture content of 10 to 20 wt.% while holding the tube open by inflation to form a poly(ethylene oxide)-containing non-derivatized cellulose casing (34);
f) flattening the poly(ethylene oxide)-containing non-derivatized cellulose casing and then reeling it; and
g) unreeling the casing and inflating it for shirring; wherein the poly(ethylene oxide) in the casing provides means for preventing the blocking of the flattened casing to itself as compared to a like casing only without the poly(ethylene oxide).

10. A method as claimed in claim 9 wherein step (b) comprises adding 1 to 2 wt.% of said first aqueous solution to a blend of the cellulose pulp, water and tertiary amine oxide cellulose solvent.

11. A method as claimed in any one of claims 4 to 10 wherein the poly(ethylene oxide) has a molecular weight of 100,000 to 1,000,000.

12. A method as claimed in any one of claims 4 to 11 wherein the amount of poly(ethylene oxide) in the casing is 0.4 to 2% of the cellulose.

13. A method as claimed in any one of claims 6 to 12 wherein the premix contains 0.6 to 1.0% poly(ethylene oxide) based on the weight of the cellulose.

14. A method as claimed in claim 13 wherein the premix contains 0.75% poly(ethylene oxide) based on the weight of the cellulose.

15. A method as claimed in any one of claims 4 to 14, wherein the poly(ethylene oxide) has a molecular weight of about 100,000.
